Europäisches Patentamt

European Patent Office

Office européen des brevets

(19)

(11) Publication number: **0 240 469**
**A2**

(12) **EUROPEAN PATENT APPLICATION**

(21) Application number: **87830075.5**

(22) Date of filing: **03.03.87**

(51) Int. Cl.³: **A 46 B 7/10**
**A 46 B 13/02**

(30) Priority: **03.03.86 IT 934886**

(43) Date of publication of application:
**07.10.87 Bulletin 87/41**

(84) Designated Contracting States:
**CH DE ES FR GB LI SE**

(71) Applicant: **Galluccio, Antonmassimo**
**Via Cristoforo Colombo, 223**
**I-89032 Bianco Reggio Calabria(IT)**

(72) Inventor: **Galluccio, Antonmassimo**
**Via Cristoforo Colombo, 223**
**I-89032 Bianco Reggio Calabria(IT)**

(74) Representative: **Mannucci, Gianfranco, Dott.-Ing.**
**Ufficio Tecnico Ing. A. Mannucci Via della Scala 4**
**I-50123 Firenze(IT)**

(54) **Automatic toothbrush.**

(57) The toothbrush has a swab-like, that is, cylindrical brush-like rotor (1), able to rotate in opposite directions by automatic control obtained through the contact of one or the other of two opposite longitudinal edges (9A, 9B) of a shell (7) which partially covers the swab-like rotor (1), on the gums or on the tooth.

Fig. 2

EP 0 240 469 A2

## DESCRIPTION

The toothbrush is realized so that the movement of the brush ensures teeth cleaning and gums massage, as the special mechanism of which it is equipped does not consent to perform operations different from those recommended by the most correct dental technique, and which would be long and difficult if carried out manually.

The unit is essentially made up of: a direct current low voltage electric motor, operated by rechargeable batteries or directly by the mains power suitably transformed at the mains socket; a commutating switch for the motor supply; a junction means for the toothbrush rod, which is replaceable; and the toothbrush, held in a cylindrical suitably sectioned container.

The invention will be better understood by following the description and the attached drawing, which shows a practical non limitative exemplification of the same invention. In the drawing:

Figs. 1 and 2 show two views of a toothbrush;

Fig. 3 is a section on line III-III of Fig. 1;

Fig. 4 is a sectional view of the oral cavity showing the operational capabilities.

According to the drawing, the toothbrush has a

1

rotating cylindrical swab-like rotor 1, which is operable into rotation in the two directions by a motor 3 housed in the body 5, capable of possibly holding power-supply batteries even of rechargeable type (or by two motors for obtaining the two rotation directions). Said swab-like rotor 1 is partially covered by a partial more or less cylindrical shell 7 with an opening having substantially longitudinal edges 9A,9B. Commutation means 8 are provided for operating into rotation the swab 1 in one direction or the other by acting on one or the other of said two longitudinal edges 9A,9B.

In a possible embodiment, said shell 7 is part of an equipment 10 which is angularly movable about the axis of said shell 7 and/or of said swab-like rotor 1, owing to the pressure on one or the other of the two longitudinal edges 9A and 9B of said opening, against the action of a counteracting means – particularly of elastic type – which tends to return the equipment into an intermediate and power-supply interruption position. The displacement of said equipment 7,10 from said intermediate position puts into operation, according to one direction or the other, the swab-like rotor 1, each time in the moving-away direction of the bristles – instantaneously active – from the edge which is subjected to the pressure.

Alternatively, said longitudinal edges 9A,9B of the opening may include microswitch or microcontact means, able to establish the power supply - for the rotation in one direction or the other - with a contact pressure on one or the other of said edges 9A,9B.

More assemblies 10,7,1 with toothbrush are engageable on a same body 5 with motor.

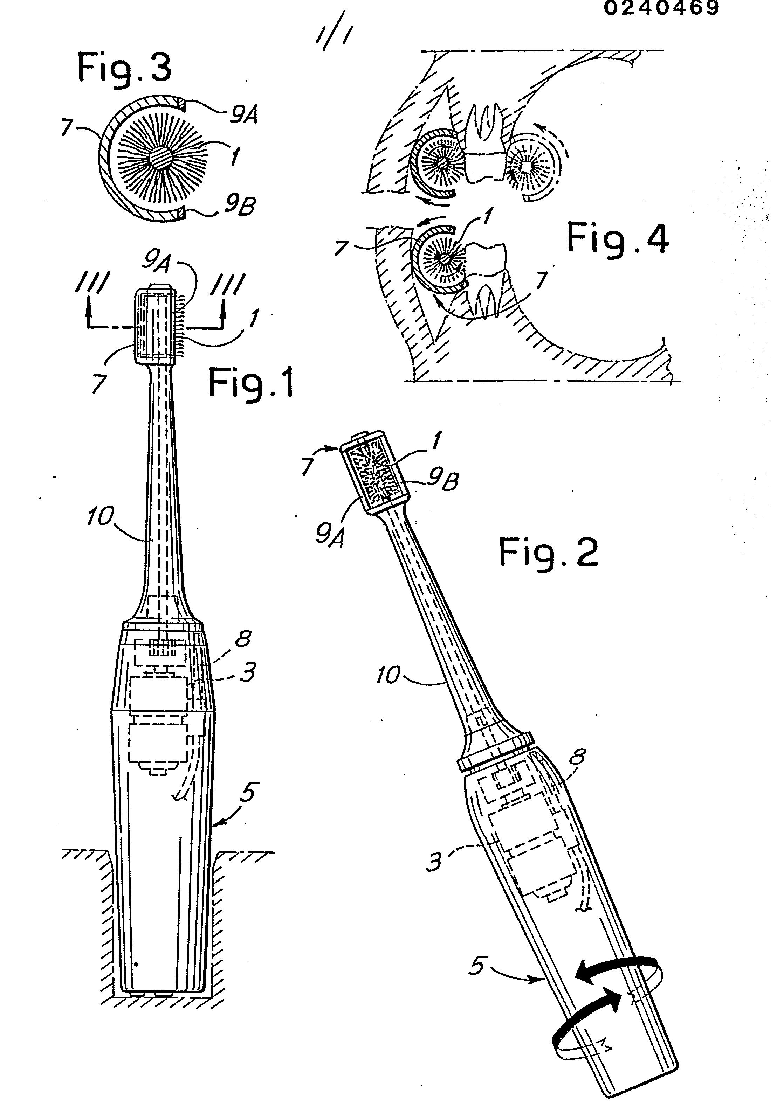

When introduced in the oral cavity, the toothbrush 1,7 remains switched off until a slight pressure is exerted through one of the two edges 9A,9B. The exerted pressure causes the rotation of the cylindrical shell 7 about the common axis of the shell and of the toothbrush and thus of the whole container 10 with which it is solid in respect to the body 5 of the motor, that makes up also the handle of the whole device, or acts on the microswitch or on the microcontacts located inside the edge subjected to the pressure. In either cases, control for the rotation of the toothbrush in the correct direction is obtained. The direction of the angular approach to the tooth or gum of one edge or the other of the cylindrical shell 7 is the most natural one, being that which is instinctively impressed to a usual toothbrush. This is shown in Fig. 4 for three of the possible positions of

3

the toothbrush in respect to the dental arches. The switch will be, at this point, "excited" so as to give the swab-like rotor 1 a rotation in the same direction as the one of the user's wrist.

Whatever the position of the bristles of the toothbrush 1 may be - inside and outside of the dental arches - the rotation will be automatically the right one, that is, the one which ensures the movement of the bristles from the gum to the tooth and never viceversa, according to the odontological rules for oral hygiene.

The cleaning of the horizontal active parts of the teeth between the opposite arches - since the mechanism for the actuation and inversion of rotation is not able to operate, as the edges of the cylindrical shell are not in contact with the teeth nor with the gums - will take place in the usual way, that is, by using the toothbrush as it were of manual type with fixed bristles.

The cylindrical shell 7 lets only half or less than half of the whole perimeter of the bristle cylinder 1 protrude; its dimension will be such as to allow the rotary movement to occur without the bristles coming into contact with the cheek walls; inside the shell 7, the bristles will not skim over the internal surface of the same shell.

The diameter of the bristles cylinder 1 may be of 1.6 cm, while the housing cylindrical shell 7 will have a thickness of about 1 mm at the border and of 3 mm at the edges 9A,9B in order to rest on the gums without injuring them, and hold possible microswitches or microcontacts.

The assembly 1,7,10 is interchangeable; this will permit the use of the same basic apparatus 3,5 by several users; the cost of the basic element 3,5 will weigh for only a fraction over each user.

It is understood that the drawing shows only an exemplification given merely as a practical demonstration of the invention, as this may vary in the forms and dispositions without nevertheless departing from the scope of the idea on which the same invention is based. For example, a specific switch for the manual control (even selective for the two directions of rotation) may also be provided independent from the controls attained by the the member 7, and with their exclusion. Moreover, it is possible to provide a speed regulator and variator - with a rheostat or other - on which it is possible to act both before and possibly even during the usage of the toothbrush.

The construction technique of the swab-like rotor may be chosen among those known at present, with radial bristles disposed along circumferences, according to longitudinal alignments (with or without staggers), according to helicoidal alignments or other.

0240469

CLAIMS

1) A toothbrush with rotating cylindrical swab-like rotor (1), characterized in that said rotor (1) is operable into rotation in the two directions; that said swab-like rotor (1) is partially covered by a partial more or less cylindrical shell (7) with an opening having substantially longitudinal edges (9A,9B), and that commutation means (8) are provided to operate into rotation the swab in one direction or the other by an action on one or the other of said two longitudinal edges (9A, 9B).

2) Toothbrush according to the preceding claim, characterized in that said shell (7) is part of an equipment (10) angularly movable about the axis of said shell (7) and/or of said swab-like rotor (1), owing to the pressure exerted on one or the other longitudinal edge. of the said opening, against the action of a counteracting means – mostly elastic – which tends to return the equipment (10) into an intermediate and power supply interruption position; the displacement of said equipment (10) from said intermediate position causing the operation in one direction or the other of the swab-like rotor (1), each time in the moving-away direction of the bristles from the edge (9A or 9B) subjected to the pressure, in the active arch of same bristles.

3) Toothbrush according to claim 1, characterized in that said longitudinal edges (9A, 9B) of the opening include microswitch or microcontact means able to establish the power supply for the rotation in one direction or the other through a contact pressure on one edge or the other.

4) Toothbrush according to claim 2 or 3, characterized in that more assemblies with toothbrush are engageable on the same body with motor (3).

5) Toothbrush according to the preceding claims, characterized in that it comprises other manual control means, and/or speed regulation means.

0240469

Fig.3

Fig.4

Fig.1

Fig.2